# EUROPEAN PATENT SPECIFICATION

(11) **EP 0 256 804 B1**
(45) Date of publication and mention of the grant of the patent: **28.09.1994**
(21) Application number: 87307010.6
(22) Date of filing: 07.08.1987
(51) Int. Cl.: G06K 7/10

(54) **Code reader**
Kodierungsleser
Lecteur de code

(30) Priority: 20.08.1986 US 898279
(43) Date of publication of application: 24.02.1988
(73) Proprietor: Emhart Glass Machinery Investments Inc., Wilmington, Delaware 19801 (US)
(72) Inventor: Claypool, Mark P., Horseheads New York 14845 (US); Weber, Gary C., Horseheads New York 14845 (US); Shay, Timothy W., Horseheads New York 14845 (US); Scott, Paul F., Hartford Connecticut 06106 (US)
(74) Representative: Randall, John Walter

(56) References cited:
- DE-A- 2 447 479
- FR-A- 2 479 511
- US-A- 3 761 725
- US-A- 4 201 338
- US-A- 4 524 270

## Description

### BACKGROUND OF THE INVENTION

The invention relates generally to apparatus for reading codes on containers and deals more particularly with apparatus for optically reading relieved code elements.

Codes are widely used today on various products to provide source, pricing and other information about the product. For example, in the bottle making industry, bottles are often formed by a multiple section forming machine, and a code is molded into each bottle indicating the section in which the bottle was formed. In the event that a particular mold produces defective bottles, the defective bottles can be detected by inspection apparatus and the mold code of the defective bottles read to determine the source of the defective bottles. At which time, the defective mold may be replaced.

The molded code may take various forms such as a bar code, a dot code or a ring code, which bars, dots or rings may protrude from the bottle sidewall or bottom surface. In U.S. Patent No. 4,524,270 to Martin, a bar code reader is disclosed. The 4,524,270 patent issued June 18, 1985 is assigned to the assignee of the present invention and is hereby incorporated by reference as part of the present disclosure. The 4,524,270 optical reading head is positioned at the level of the code. Each of the bar code elements protrudes from and is skew relative to the surface of the surrounding region of the sidewall and the bottle is rotated to sequentially expose each bar code element to the scanning head. The scanning head comprises a source of light aimed at the level of the code, a linear array of optical receiving fibers, a lens assembly positioned to receive light reflected from the code elements and focus the light onto the linear array of optical fibers and a series of photosensitive diodes associated with each of the optical fibers, respectively. When each bar passes in front of the scanning head, light reflects from the surface of the bar through the lens assembly and into one or more of the receiving optical fibers to indicate the presence and length of the bar. When a region of the sidewall surface is exposed to the scanning head and no code elements are present, then the light source illuminates the sidewall and the light is reflected away from the lens assembly and no diodes are activated.

It has proven difficult in practice to produce the code elements with enough precision and to align the code elements with the lens assembly and receiver fibers with enough accuracy to ensure that light reflected from the reflective surface of each code element actually reflects through the lens assembly and into the linear array of receiver optical fibers. Without such precision and alignment, it is difficult to detect the bar code elements. In addition, occasionally the scanning head, even when properly aligned with a code element, detects reflections from a back side of the bar code element, a so-called "phantom" reflection, which further complicates the code reading process.

Dot code elements take various forms such as rounded wedges as disclosed in U.S. Patent No. 3,991,883 to Hobler et al, which patent is hereby incorporated by reference as part of the present disclosure, and raised hemispherical "bumps". In the past, such codes have been detected by projecting light onto each dot in sequence and positioning a photodetector to receive a reflection from the dot in a similar manner to the detection of bars discussed above.

U.S. Patent No. 4,201,338 to Keller, against which claims to 1 and 3 are delimited, discloses a dot code formation having two parallel, linear patterns of dots. One pattern comprises equally spaced dots and serves as timing marks, and the other pattern contains dots aligned with some of the timing dots and contains the actual binary information of the code. The 4,201,338 patent also discloses a light source positioned to transmit light horizontally approximately tangent to a container sidewall, and a photodetector positioned to receive light reflected at approximately 70° relative to the angle of the incident light, which photodetector is positioned approximately normal to the tangent point. The positioning of the photodetector corresponds to the angle of light reflected from the dots.

Another previously known dot formation has a single linear pattern of dots, two dots at the beginning spaced by a standard amount, two dots at the end spaced by a standard amount and five other dots between the beginning and end pairs of dots. Between the beginning and end pairs of dots is a linear distance sufficient to contain nine dots based on the aforesaid standard spacing. The dots at the beginning and end serve to frame the code, and the location of the five intermediary dots provides the actual information.

FR-A-2479511 describes an apparatus for reading bar codes on an article. The bar codes are arranged to have a different reflectivity to that of the surface of the article to which they are applied, and the code is read by projecting light against the bar code and detecting the difference between the light reflected by the bar code and the article surface. Such a system cannot be applied to the reading of codes on glass containers where the codes are necessarily moulded onto the surface from the same material as the article itself.

Accordingly, a general object of the present invention is to provide an apparatus for reading molded and other relieved code elements, which apparatus does not require precise alignment with the code elements or strict manufacture tolerances in the code elements.

The present invention provides a method for reading relieved code elements of a code on a container comprising the steps of:
rotating said container at an inspection site,
projecting light toward the surface of the container at a level corresponding to the location of the code elements to sequentially illuminate each of the code elements, and
sensing the intensity of the projected light which is reflected at a natural angle (i.e the angle between the projected light and a plane passing through an axis of the container is equal to the angle between the reflected light and the same plane) from the container surface while avoiding the projected light which illuminates each relieved code element and is reflected at a range of angles,
the intensity of the reflected light sensed from the region of said container devoid of a code element being relatively large compared to the intensity of the reflected light sensed from a region of said container containing a code element.

The present invention also provides a system for identifying defective molds in a container forming machine, said system comprising:
a plurality of container each having a code of relieved code elements identifying the mold in which the container was formed,
means for rotating each of said containers at an inspection site,
illumination means for projecting light toward said container while at the inspection site at a level corresponding to the location of the code elements so that said light sequentially illuminates each code element individually during the rotation of said container,
sensor means for receiving light projected by the illumination means which is reflected at a natural angle (i.e. the angle between the projected light and a plane passing through an axis of the container is equal to the angle between the reflected light and such plane) from the surface of said container while avoiding light projected by the illumination means which is reflected from the surface of each code element at a range of angles relative to the light which is reflected from the surface of the container, and producing a first output signal corresponding to the relatively large amount of light reflected from a region of said container which does not contain a code element and second output signal corresponding to the relatively small amount of light reflected from a region of said container which contains a code element, and
means for mounting said illumination means and said sensor means in operative relation to said inspection site such that said illumination means is positioned to project said light toward the container surface at the level of the code and said sensor means is positioned to receive the light of said illumination means which is reflected at a natural angle from the container surface.

The accompanying drawings show, by way of example, apparatus in accordance with the invention.

Figure 1 is a side elevational view of the lower part of a glass container with a dot code protruding from the sidewall of the container.

Figure 2(a) shows a schematic view of a scanning head and an associated electronic control for reading the dot code of Figure 1, and a side elevational view of the glass container of Figure 1 turned 90° about its axis to expose a code element to the scanning head.

Figure 2 (B) shows a fragmentary view of the scanning head of Figure 2(a) and the bottle of Figure 2(a) turned 90° about its axis to expose a portion of the bottle sidewall to the scanning head.

Figure 3 is a cross-sectional view of the scanning head of Figure 2(a) along the plane 3-3 and illustrates sender and receiver optical fibres within the scanning head.

Figure 4 is a block diagram illustrating circuitry within the electronic control of Figure 2(a).

Figures 5(a-d) illustrate various wave forms produced by the circuitry of the electronic control of Figure 2(a) in relation to the code elements of the code on the container of Figure 1.

Figure 6 is a side elevational view of the lower part of a glass container having a bar code molded into its sidewall.

Figure 7 shows a side elevational view of the container of Figure 1 turned 90° about its axis, and a schematic view of a scanning head and an associated electronic control for reading the dot code.

Figure 8 is a cross-sectional view of the scanning head of Figure 7 taken on the plane 8-8 and illustrates optical fibers within the scanning head.

Figure 9 is a block diagram illustrating electronic circuitry within the electronic control of Figure 7 for processing signals obtained from the scanning head and translating them into a binary representation of the bar code.

Figures 10(a-e) illustrate various wave forms developed by the electronic control of Figure 7 after various stages of processing in relation to the code elements of the code of Figure 6.

Figure 11 is a schematic top view of the container of Figure 1 and code reading apparatus of another embodiment of the invention.

### DETAILED DESCRIPTION OF THE PREFERRED EMBODIMENTS

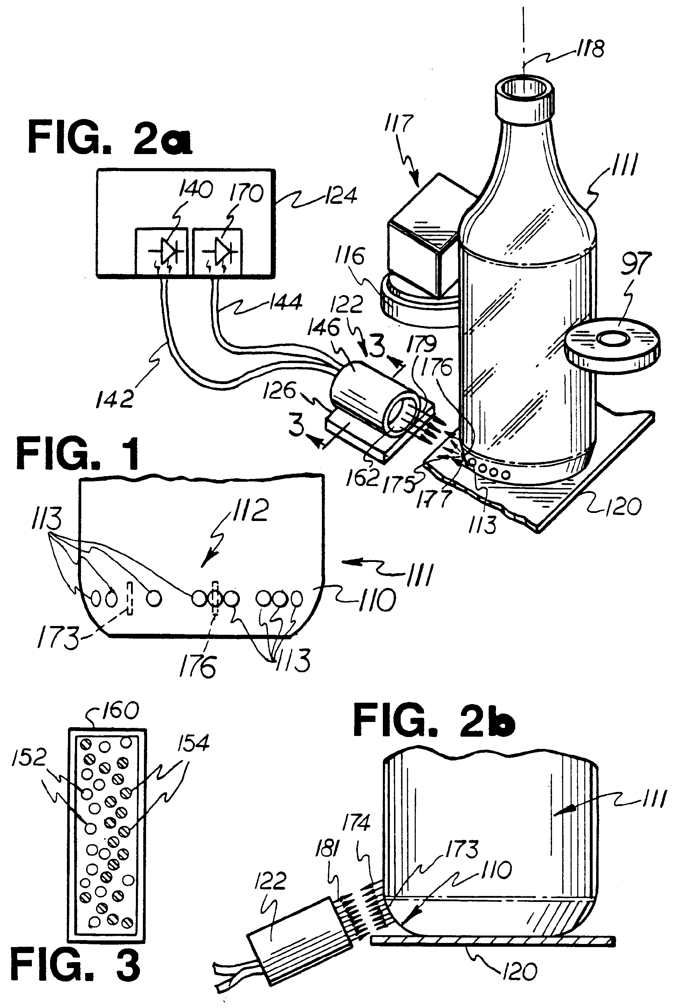

Turning now to the drawings, Figure 1 illustrates the lower or heel portion of a glass bottle 111 having a dot code 112 molded into a sidewall 110. By way of example, the bottle 111 was made in a multiple section glassware forming machine and the dot code indicates the mold in which the associated bottle was made. The dot code 112 is the type described above which includes two dots 113, 113 at the beginning of the code, two dots 113, 113 at the end to frame the code and five dots 113, 113 located in between the beginning and end dots to provide the actual code information. All of the dots 113, 113 are situated at approximately the same vertical level. As illustrated in Figure 2(a) by the side view of the dot 113, each of the dots protrudes from the sidewall 110 in the form of a hemispherical "bump" although it should be clearly understood that a wide range of shapes and types of code elements may be read by the present invention, but preferably each of the code elements has a surface portion which is non-perpendicularly angled or skewed relative to the adjacent sidewall.

Figure 2(a) also illustrates a belt 116 which is part of a motor and pulley assembly 117 and a pair of wheels 97, 97 to counter the belt, for rotating the bottle 118 while being supported on a plate 120 (or a conveyor surface) at an inspection site. Figure 2(a) further illustrates an optical scanning head 122 and an associated electronic control 124 for reading the dot code 112. The scanning head 122 is supported by a bracket 126 to aim normally (perpendicularly) toward the heel portion of the bottle 111 containing the code 112, and as the bottle 111 is rotated, each code element 113 in sequence passes in front of the optical scanning head 122 and other regions of the sidewall 110 which do not contain a code element also pass in front of the scanning head.

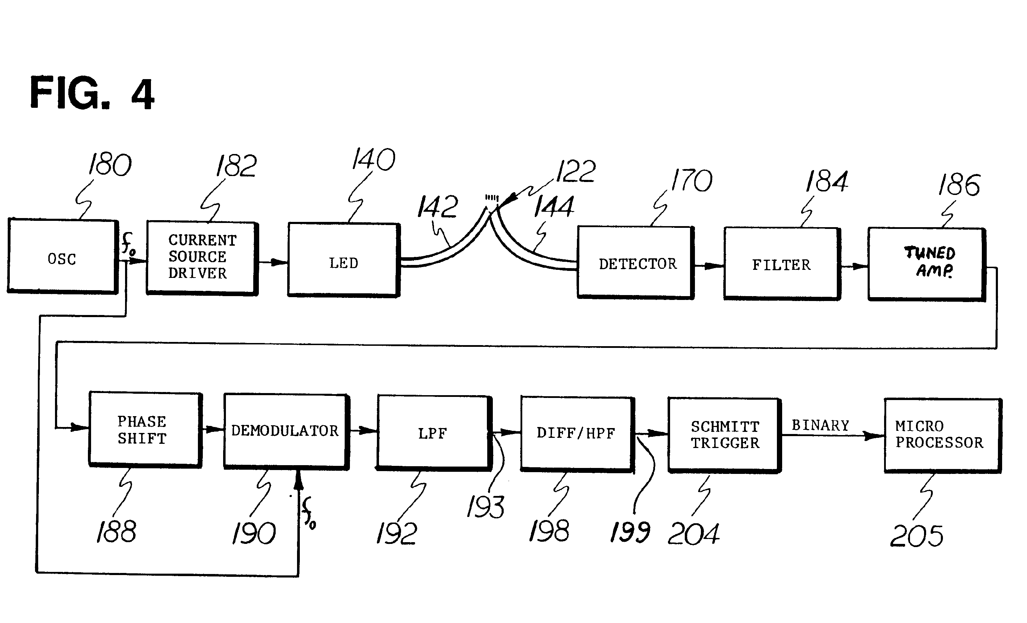

The optical scanning head 122 comprises a sender fiber optic bundle 142 and a receiver fiber optic bundle 144 which merge together within a housing 146. As illustrated in Figure 3, optical fibers 152, 152 of the sender bundle 142 are randomly intermingled with optical fibers 154, 154 of the receiver bundle 144 and, the ends of the fibers 152, 154 within the housing 146 are approximately parallel to each other. The optical fibers 152, 154 are constrained within a rim 160 and by way of example, the rim has an inner length of 0.154 inches and an inner width of 0.02 inches, the diameter of each fiber is 0.001 inches and the diameter of each dot is approximately 0.05 inches. The sender bundle 142 projects a correspondingly shaped, composite rectangular beam of light 173 or 176 onto the container (Figure 1). The width of the beam is less than the center spacing between adjacent dots, and preferably less than or equal to the sidewall spacing between two adjacent dots.

A high intensity light emitting diode (LED) 140 transmits light into one end of the sender bundle 142. A converging lens 162 focuses light projected by the sender fibers 152 preferably at a point a short distance before the dots 113, 113 and the surface of the sidewall 110 so that light reflected from the sidewall 110 and the dots 113, 113 is not reflected directly back into the sender fibers 152, 152. Also, this lens design minimizes the amount of light reflected by the inner surface of the sidewall 110 back to the scanning head 122. As illustrated by arrows 179 and 181 in Figures 2(a) and (b), respectively, the light transmitted through the sender fibers 142, 142 proceeds approximately normal or perpendicular to the container sidewall 110. The height of the transmitted column is greater than the diameter of the dots 113, 113 to accommodate vertical misalignment between the optical scanning head 122 and the dots 113, 113. When a portion 173 (Figure 1) of the container sidewall 110 devoid of a dot 113 is exposed to the transmitted light, a detectable amount, for example five percent, reflects back toward the scanning head 122 in a direction approximately parallel to the direction of the incident light as illustrated by arrows 174, 174 in Figure 2(b). This light is focused by the lens 162 and received in the receiver fibers 154, 154. It should be noted that of the five percent return, approximately four percent results from reflections from the outer surface of the container sidewall 110 and approximately one percent results from reflections from the inner surface of the container sidewall.

The light received within the receiver fibers 154, 154 illuminates a photoreceptor diode 170 and represents a high level of reflection received by the scanning head 122 as illustrated by the number of arrows 174, 174 of Figure 2(b) which aim toward the scanning head 122. However, when the bottle is rotated to the orientation of Figure 2(a) such that one of the dots 113 is positioned within the field of the scanning head 122, much of the light projected toward the dot 113 is reflected at an appreciable angle or scattered relative to the angle of the incident light as illustrated by arrows 175, 175 so that little of this reflected light proceeds toward the lens 162 and the receiver fibers 144, 144. Due to the relatively large cross-sectional length of the composite light beam projected by the sender fibers 142, the projected light also strikes regions of the container sidewall 110 above and below the dot 113 as illustrated in Figure 1 and arrows 177, 177 of Figure 2(a) and this yields a reflection which proceeds toward the scanning head 122 and the receiver fibers 144. However, the collective intensity of the light reflected from the region 176 including the dot 113 and the regions above and below is less, for example thirty percent, than the intensity of the light reflected from the region 173 of the container sidewall 110 which is devoid of any dot 113.

Figure 4 illustrates circuitry within the electronic control 124 which drives the LED 140 and processes the signals produced by the photoreceptor diode 170. An oscillator 180, for example set at 500 kilohertz, supplies a sinusoidal wave form to a current driver 182 which squares-up the sign wave and supplies a corresponding, drive current to the LED 140 causing the LED to flash at the corresponding frequency. The LED 142 supplies light to all of the sender fibers 152, 152 within the sender bundle 142 simultaneously.

Light received by the receiver fibers 154, 154 collectively illuminates the photoreceptor diode 170 which produces a signal (conductivity) proportional to the intensity of the light. The signal has a carrier frequency equal to the frequency of the oscillator 180 and the intensity is modulated by the variations in reflection intensity caused by the dots as they sequentially pass by the scanning head 122. The modulation frequency depends on the speed of rotation of the bottle 111 and the diameter and spacing of the dots.

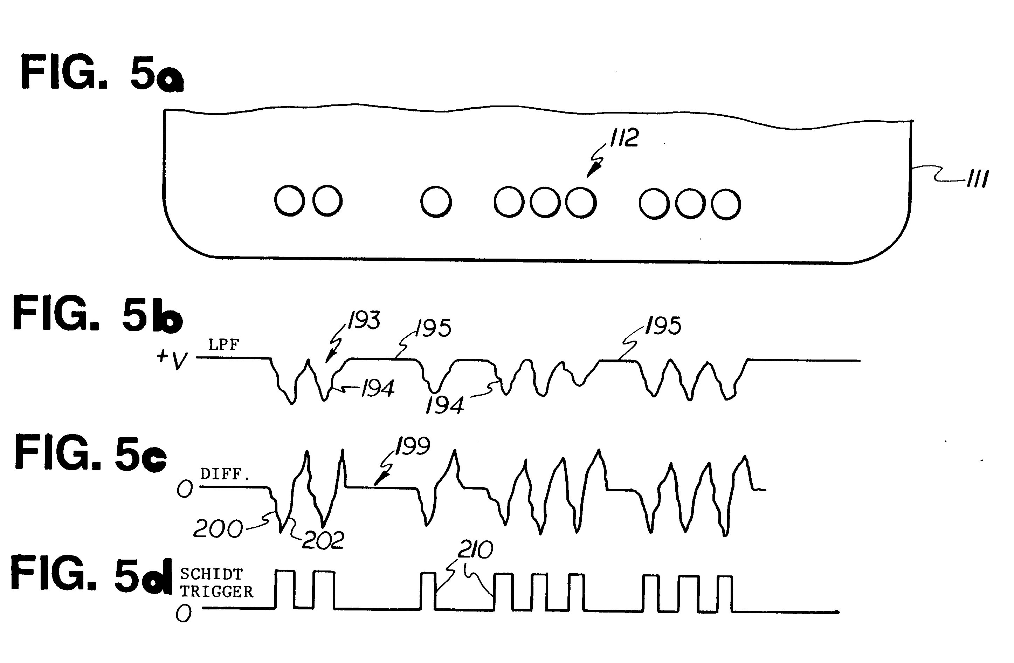

The photoreceptor signal is supplied to a preamplifier which contains a filter 184 tuned at the oscillator 180 frequency to reduce the noise and a tuned amplifier 186. The filter 184 imparts a phase shift to the signal so the output of the tuned amplifier 186 is supplied to a video amplifier 188 which includes phase shifting circuitry to correct the phase to correspond to that of the oscillator 180. The output of the amplifier 188 is then applied to a balanced demodulator 190 which, by way of example, comprises a multiplier having one input connected to the output of the video amplifier 188 and another input connected to the output of the oscillator 180. Consequently, the output of the balanced demodulator 190 is the modulation signal and another, much higher frequency signal (a frequency approximately twice that of the oscillator 180). The higher frequency signal is filtered by a low pass filter 192 and an output 193 of the low pass filter 192 is illustrated in Figure 5(b). Valleys 194, 194 of the wave form 193 correspond to the relatively low intensity or absence of light received by the scanning head 122 when one of the dots 113 is located within the field of the scanning head and scatters the incident light, and plains 195, 195 of the wave form 193 correspond to the relatively high intensity of the light reflected from the container sidewall 110 when no dot 113 is within the field of the scanning head 122.

The output of the low pass filter 192 is supplied to a differentiator or matched high pass filter 198 to yield a wave form 199 shown in Figure 5(c). Figure 5(c) illustrates that the falling portion of each valley 194 yields a relatively sharp falling portion 200 of the differentiated signal 199 and the rising portion of each valley 194 yields a relatively sharp rising portion 202 of the differentiated wave form. The output 199 of the differentiator 198 is supplied to a Schmidt trigger 204 which is set to trigger to its binary one state 210 at a voltage level approximately half the average peak negative voltage of the differentiated signal 199 corresponding to the dots 113, 113 and to reset itself to the binary zero level at approximately zero volts as illustrated in Figure 5(d). Consequently, Figure 5(d) provides a clear binary representation of the dot code elements 113, 113 of the dot code 112 in accordance with the objects of the invention. Digital processing techniques utilizing an optional microprocessor 205 are currently known to extract the information from the code 112 which information is based on the location of the middle five binary one level pulses 210, 210.

It should be noted that if desired, the output of the low pass filter 192 may be fed directly into the Schmidt trigger 204 to provide the binary wave form of Figure 5(d). Whether or not the differentiator 198 or other such processing circuitry is included depends on the particular application of the scanning head 122 and the types of bottle noise due to seams and lettering and other noise presented by the particular types of bottles being scanned and the surrounding environment.

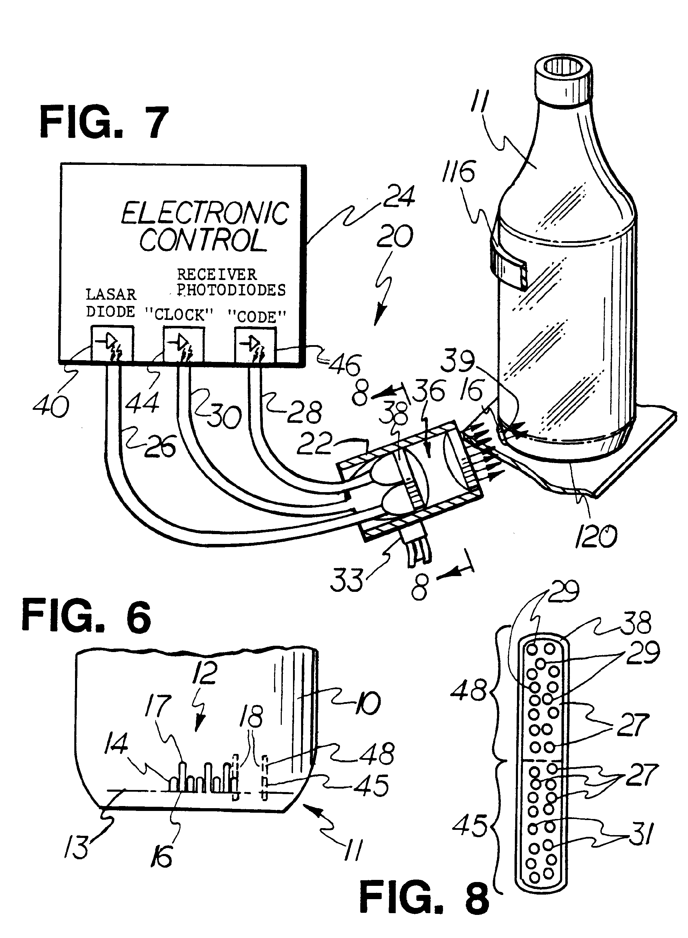

Turning now to a second embodiment and application of the invention, Figure 6 illustrates a bar code 12 located on a sidewall 10 of a glass container 11. The bar code comprises shorter elements 14, 14 and longer elements 16, 16 which are substantially parallel to and uniformly spaced from one another. The elements 14 and 16 are also registered along an imaginary baseline 13. Each of the bar elements 14 and 16 protrudes outwardly from the sidewall 11 and is shaped in the form of an optical reflector. By way of example, the longitudinal sides of the bar elements are either rounded to form a semi-circular cross-section or flat to form a tent shaped cross-section or some shaped intermediary configuration. Figure 7 illustrates a side view of one of the protruding bar elements 16.

The lengths of the bar elements 14 and 16 indicate respective binary levels and the code 12 provides up to eight bits of information. As discussed in more detail later, the shorter elements 14, 14 and the bottom half of each longer element 16 serve as timing marks to indicate the location of a bar or bit of information, the top portion of each of the longer bar elements 16 indicate one binary level and the container sidewall region above each of the shorter elements 14, 14 indicates the other binary level.

Figure 7 also illustrates a code element reading apparatus generally designated 20 in which the second embodiment of the invention is embodied. The code element reading apparatus 20 comprises a code reading head 22 and an electronic control 24, and is shown reading the code 12 on the bottle. The bottle 10 is supported on the base 120 at the scanning site adjacent to the scanning head 22, and during scanning, is rotated by the belt 116 to expose each of the code elements 14, 16 in sequence to the optical scanning head 22. The speed of rotation is either predetermined or monitored by the electronic control 24. The scanning head 22 is supported by a bracket 33 normal to the exposed code element at the inspection site.

The scanning head 22 comprises a bundle 26 of sender optical fibers 27, 27, a bundle 30 of receiver clock optical fibers 31, 31 and a bundle 28 of receiver code optical fibers 29 (see Figures 7 and 8). A rim 38 supports exposed ends of the optical fibers 27, 29, 31 within the bundles 26, 28 and 30, and a pair of plano convex lenses 36 focuses light to and from the optical fibers. Both the axes of the plano convex lenses 36 and the optical fibers within the rim 38 are approximately normal to the exposed code element 16. As illustrated in Figure 8, half of the exposed fibers within the rim 38 eminent from the sender bundle 26 and are distributed randomly over the entire length of the rim 38 so that light provided by an LED 40 (Figure 7) is received by the sender optical fibers 27, 27 and projected over a region 18 (Figure 6) which is longer than the length of the code elements 16, 16. The extra length accomodates longitudinal misalignment between the code elements and the scanning head 22.

Common ends of the clock optical fibers 27, 27 are randomly distributed within a lower half 45 of the rim 38 and are normal to the bottom half of each longer element 16 and to each entire shorter element 14 when the respective code element is aligned with the scanning head 22. The opposite ends of the clock optical fibers 31, 31 aim at a code photodiode 46.

Common ends of the code optical fibers 29, 29 are randomly distributed within an upper half 48 of the rim 38 and are normal to the top half of each longer code element 16 and to a region on the bottle sidewall 10 above each shorter code element when the respective code element is aligned with the scanning head 22. The opposite ends of the code fibers 29, 29 aim at a code photodiode 46.

The lens 36 is focused just before the exposed code element for reasons discussed above. When a code element is not within the field of the lenses 36, light emitted by the LED 40 projects onto the container sidewall 10 and a detectable amount, for example five percent, is reflected off the sidewall back through the lens 36 and into the entire code and clock receiver fibers 29, 31.

The resultant signals produced by the photodiodes 44 and 46 are processed by the electronic control 24 as discussed below. When the bottle 10 is rotated such that one of the longer code elements 16 is positioned in front of the scanning head 22, much of the light transmitted by the LED 40 via the bundle 26 reflects laterally off the curved or angled sides of the code element 16 away from the scanning head 22 as indicated by arrows 39, 39 so that relatively little light (approximately two percent) reflects back to the optical fibers 29 or 31. When the bottle 11 is further rotated such that one of the smaller code elements 14 is positioned in front of the scanning head 22, light emitted by the LED 40 is projected onto the code element 14 and onto a region on the sidewall 10 above it. Much of the light which illuminates the code element 14 is reflected laterally from the sides of the code element so that relatively little light (approximately two percent) reflects back to the clock fibers 31, 31, while much of the light which illuminates the sidewall region is reflected normally and into the code fibers 29, 29 (approximately five percent). Because the clock optical fibers 31, 31 are distributed in the lower portion 45 of the rim 38 and are normal to the code element 14, they receive relatively little of the light reflected from the sidewall portion. As the bottle 11 is rotated further, the other code elements 14, 16, the sidewall regions between them and the sidewall regions above the shorter elements 14, 14 are sequentially illuminated by the LED 40 and scanned.

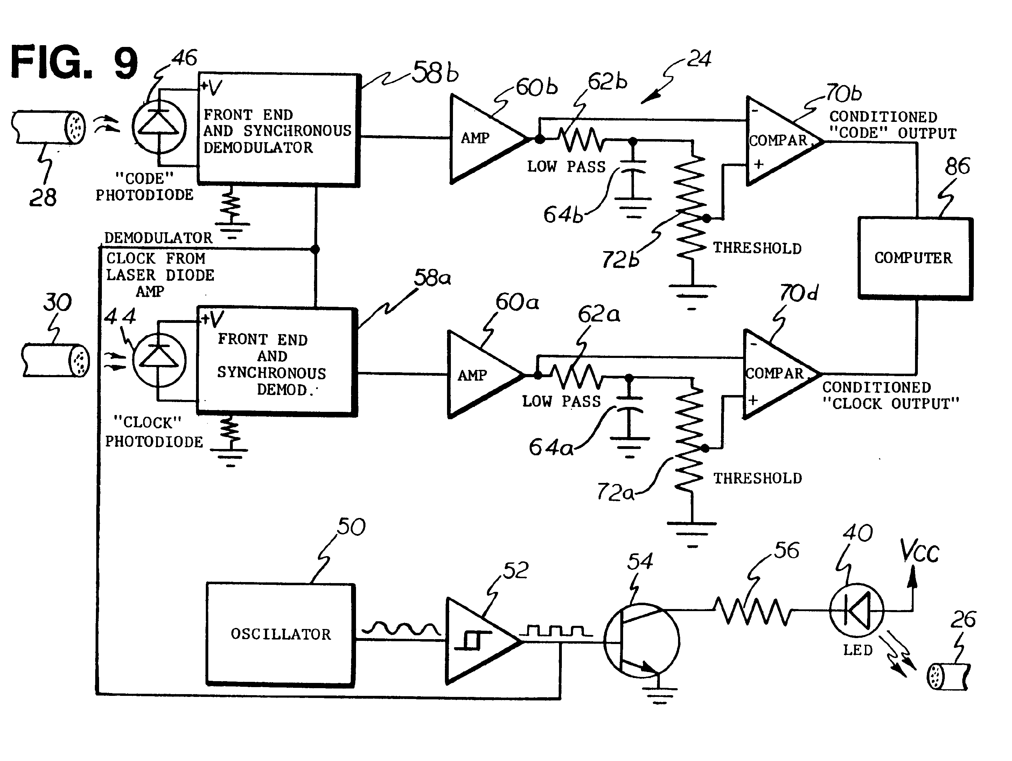

Figure 9 illustrates the LED 40 and modulation circuitry which drives it. The modulation circuitry comprises an oscillator 50 which, by way of example, produces a 500 kilohertz sinusoidal wave form, a gate 52 to square up the sinusoid, for example, a Schmidt trigger, and a transistor 54 which interfaces to the LED 40 via a current limiting resistor 56. As described above, as the bottle 11 rotates, the intensity of the reflected light is modulated by the differences in normal reflectivity between the container sidewall and the code elements.

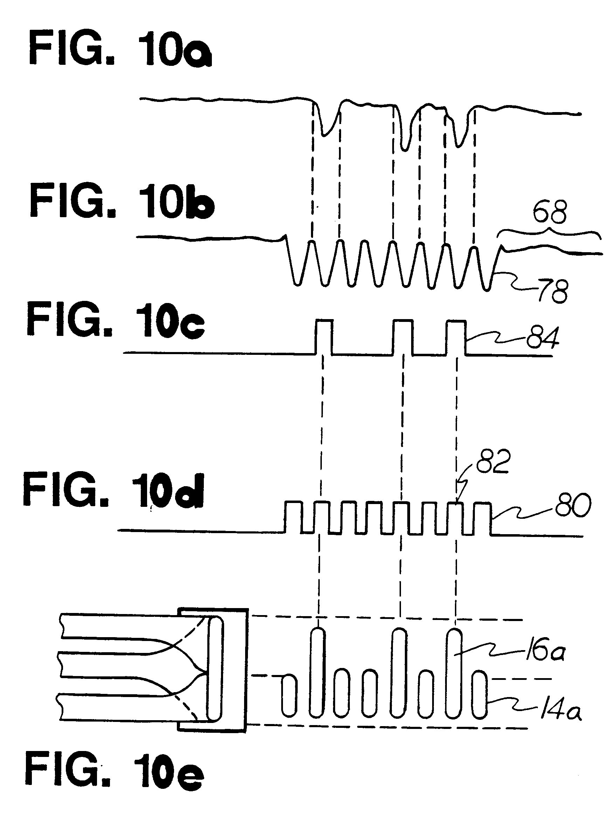

The clock photodiode 44 is connected to a front end and synchronous demodulator circuit 58a, the front end portion including an amplifier and the demodulator including a multiplier as described above. The output of the circuit 58a is amplified by an amplifier 60a and a clock signal amplifier output is illustrated in Figure 10(b). During a first portion 68 of the clock signal wave form, the code 12 was not positioned in front of the scanning head 22 so that the clock optical fibers 31, 31 receive a significant amount of light reflected normal from the container surface, which light level, for example corresponds to approximately 2.5 volts at the output of the amplifier 60a.

The output of the amplifier 60a is also passed through a low pass filter comprising a series resistor 62a and a parallel capacitor 64a which removes virtually all of the AC component of the clock signal leaving the 2.5 volt D.C. This D.C. voltage varies with changes in bottle type and color and ambient conditions. Then the output of the low pass filter is divided by a potentiometer 72a to form a threshold level and supplied to the positive input of the comparator 70a. This threshold level also varies due to changes in container reflectivity and ambient conditions and therefore, automatically adjusts itself to a proper level to distinguish the relatively high reflections from the container sidewall from the relatively low reflections when a code element is aligned with the optical scanning head. In the illustrated example, when the output of the amplifier 60a due to reflections from the non-coded container surface is approximately 2.5 volts, the threshold is set to approximately 1.75 volts and as a result, as indicated by Figure 10(d), the comparator output zero volts when the optical scanning head faces the non-coded container surface.

When a short code element 14a illustrated in Figure 10(e) is aligned with the clock fibers, the light projected by the sender fibers 27,27 strikes the code element 14a and is reflected at an appreciable angle relative to the normal so that very little reflected light is received by the clock receiver fibers 31, 31. Consequently, as illustrated by a portion 78 of Figure 10(b), relatively little light is projected onto the clock photodiode 44 and the resultant output of the amplifier 60(a) is relatively low, in the illustrated embodiment, approximately one volt. The threshold level applied to the positive input of the comparator 70a is affected little by the temporary dip in the amplifier 60a output so that the threshold level remains approximately 1.75 volts and the output of the comparator 70a provides a positive going pulse 80 having a width corresponding to approximately the time it takes for the code element 14a to rotate past the field of the lens 36 and clock fibers.

It should be noted that while the code element 14a is within the field of the clock fibers, light is also being projected by the sender fibers to the region on the container surface immediately above the code element 14a which light is reflected approximately normal to the surface of the container, received by the code receiver fibers and projected onto the code photodiode 46. The response of the code photodiode 46 is processed in the same manner as the response of the clock photodiode 44 by a front end and demodulator 58b, an amplifier 60b, a series resistor 62b, a parallel capacitor 64b, a potentiometer 72b and a comparator 70b as illustrated in Figure 9. While the scanning head 22 is scanning the code element 14a, the output of the amplifier 60b is at the relatively high level and the comparator 70b exhibits the low level as shown in Figure 4(c).

Next, the optical scanning head 22 scans a region between the first code element 14a and the second code element 16a so that both receiver bundles 28 and 30 receive the relatively high level of reflections from the intervening container surface and the outputs of the amplifiers 60a and b rise to the 2.5 voltage, high level.

Next, the container 11 is rotated such that the long bar element 16a is positioned in front of the scanning head 22. Because the bottom portion of the bar element 16a is aligned with the clock receiver fibers 31, 31, the comparator 70a produces a corresponding pulse 82 at its output as illustrated in Figure 10(d) and because the code receiver fibers 29, 29 are aligned with the top portion of the bar code element 16a, the comparator 70b produces a pulse 84 as illustrated in Figure 10(c). As the container 11 is further rotated, each of the code elements is scanned in sequence yielding the binary wave forms illustrated in Figures 10(a-d) in accordance with object of the invention.

The binary outputs of the comparators 70a and 70b are supplied to a computer 86 which is programmed to read the output of the comparator 70b during each pulse produced by the comparator 70a. If desired, the computer 86 may be further programmed with an algorithm to distinguish the clock pulses of the comparator 70a from pulses caused by other irregularities on the container sidewall at the level of the code such as lettering, seams, or bump defects. Such an algorithm for locating the code is disclosed in U.S. Patent Application Serial No. 876,038 filed by Joseph A. Kulikauskas on June 19, 1986 for "Selective Code Reader" which patent application is incorporated by reference as part of the present disclosure.

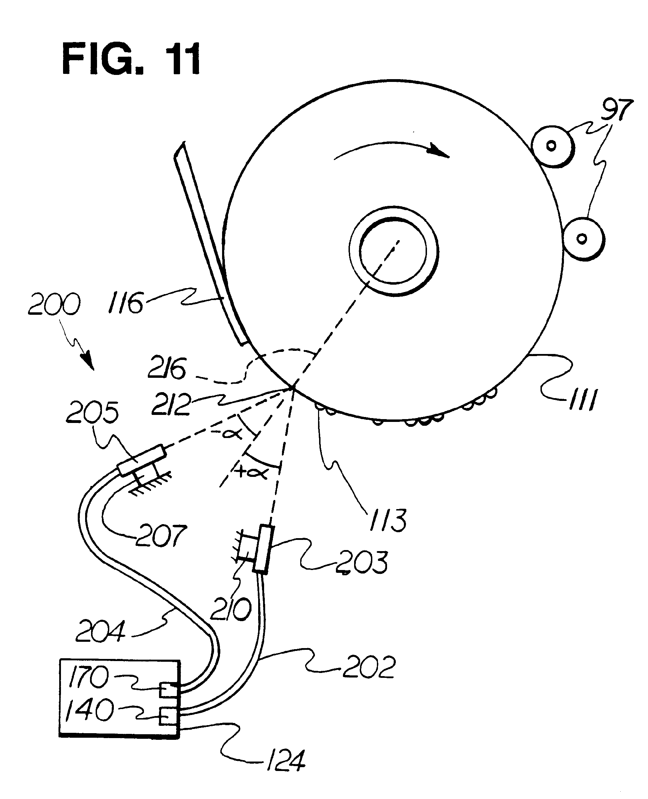

Figure 11 schematically illustrates optical scanning apparatus generally designated 200 comprising another embodiment of the invention. The apparatus 200 comprises the electronic control 124, the light emitting diode 140 and the photodetector 170 of the embodiment of Figure 2(a). The electronic control 124 of the apparatus 200 drives the LED 140 and processes output signals of the photodetector 170 in the same manner as in the embodiment of Figure 2(a). In addition, a bundle 202 of optical sender fibers is connected between the light emitting diode 140 and a rim and lens assembly 203. The assembly 203 is supported by a bracket 210 to project light toward a region 212 on the container surface at an angle alpha relative to a bottle radius 216 of the region 212. The region 212 has a rectangular cross-section similar to the regions 173 and 176 of Figure 1. When no code elements are located in the region 212, the light projected by the sender bundle 202 reflects at a natural angle of minus alpha relative to the radius 216 (or twice alpha relative to the incident light).

A bundle 204 of optical receiving fibers is connected between the photodiode 170 and a rim and lens assembly 205 and aims at the angle minus alpha at the region 212 so that when no code element is located in the region 212, the light projected by the sender bundle 202 is reflected by the container sidewall and into the receiver bundle 204. However, when a code element is located within the region 212, the light projected by the sender bundle 202 is scattered at an appreciable angle relative to the angle minus alpha so that relatively little light is received by the receiver bundle 204. Consequently, the receiver bundle 204 and photodetector 170 detect the absence of light (as does the receiver bundle 144 and photodetector 170 in the embodiment of Figure 2(a)).

By the foregoing, optical scanning heads and code reading apparatus and processes embodying the present invention have been disclosed. However, numerous substitutions and modifications may be made without deviating from the scope of the invention. For example, if desired one or more light emitting diode may be positioned within the scanning head 22 to illuminate the code 12 and adjacent portions of the container surface instead of utilizing the sender fibers 27, 27 or 152, 152. Also, two or more photodiodes may be positioned adjacent to the light emitting diode to receive reflections which are approximately normal to the container surface instead of the code and clock receiver fibers 29, 31 in the bar code embodiment, and one or more photodiode may be positioned adjacent to the light emitting diode to receive light reflected normally from the container surface instead of the code fibers 154, 154 in the dot code embodiment.

Also, if desired, the length of the rim 160 and corresponding field of light may be made equal or less than the diameter of the dots so that the intensity of reflections received by the receiver fibers 154 is very small when scanning a dot compared to the intensity received when scanning the container sidewall. Similarly, if desired, the length of the rim 38 may be made equal or smaller than the length of the longer code elements 16, 16 and the length of the portion 45 may be made equal or smaller than the length of the shorter code elements 14, 14.

Also, if desired the LED in either the bar code or dot code embodiment may take the form of a laser diode or be operated in a continuous mode instead of the pulsed mode described above. Therefore, the invention has been disclosed by way of illustration and not limitation and reference should be made to the claims to determine the scope of the invention.

## Claims

1. A method for reading relieved code elements of a code on a container comprising the steps of:
rotating said container (111) at an inspection site,
projecting light (174) toward the surface of the container (111) at a level corresponding to the location of the code elements (112) to sequentially illuminate each of the code elements (113), characterized in that the method further comprises the step of:
sensing (140) the intensity of the projected light which is reflected at a natural angle i.e. the angle between the projected light and a plane passing through an axis of the container is equal to the angle between the reflected light and the same plane, from the container surface while avoiding the projected light which illuminates each relieved code element and is reflected at a range of angles,
the intensity of the reflected light sensed from the region of said container devoid of a code element being relatively large compared to the intensity of the reflected light sensed from a region of said container containing a code element.

2. A method according to claim 1 comprising the steps of:
comparing (204) results of the sensing step to a threshold level to determine whether the projected light is illuminating a region of said container containing a code element or a region of said container not containing a code element,
said threshold level being between said relatively large and small levels.

3. A system for identifying defective molds in a container forming machine, said system comprising:
a plurality of containers (111) each having a code (112) of relieved code elements (113) identifying the mold in which the container was formed,
means (97) for rotating each of said containers at an inspection site,
illumination means (142) for projecting light toward said container while at the inspection site at a level corresponding to the location of the code elements so that said light sequentially illuminates each code element individually during the rotation of said container, characterised in that the system further comprises:
sensor means (144, 170) for receiving light projected by the illumination means which is reflected at a natural angle i.e. the angle between the projected light and a plane passing through an axis of the container is equal to the angle between the reflected light and such plane, from the surface of said container while avoiding light projected by the illumination means which is reflected from the surface of each code element at a range of angles relative to the light which is reflected from the surface of the container, and producing a first output signal corresponding to the relatively large amount of light reflected from a region of said container which does not contain a code element and second output signal corresponding to the relatively small amount of light reflected from a region of said container which contains a code element, and
means (146,126) for mounting said illumination means and said sensor means in operative relation to said inspection site such that said illumination means is positioned to project said light toward the container surface at the level of the code and said sensor means is positioned to receive the light of said illumination means which is reflected at a natural angle from the container surface.

4. A system as claimed in claim 4 comprising:
processor means (124) for translating said first and second output signals of said sensor means into binary code information, said processor means including a comparator (204) for comparing magnitudes of said first and second output signals to a threshold, said threshold being set between a relatively high level corresponding to alignment of said illumination means and said sensor means with a region of said container which does not contain a code element and a relatively low level corresponding to alignment of said illumination means and said sensor means with a code element.

5. A system as claimed in claim 5 wherein the illumination means comprises:
a source of light (170), and
a plurality of first optical fibres (152) having adjacent first ends supported to receive light from said source and opposite, second ends supported to project said light from said source toward said container, the projected light having a cross-sectional width less than the centre spacing between two adjacent code elements.

6. A system as claimed in claim 6 wherein the sensor means comprises:
a photodiode (140), and
a plurality of second optical fibres (154) having adjacent first ends aimed toward the photodiode and opposite second ends positioned to receive light reflected at the natural angle from said container.

7. A system as claimed in claim 4 wherein said means for mounting said illumination means and said sensor means includes means for positioning said illumination means to project light toward a region on said container devoid of a code element at a first substantial angle relative to a perpendicular to said region and includes means for positioning said sensor means at approximately twice said first angle so that light projected by said illumination means toward said region on said container surface is naturally reflected to said sensor means.

8. A system as claimed in claim, 4 wherein said means for mounting is adapted to position said illumination means and said sensor means in a plane which is approximately normal to the surface of said container.

## Patentansprüche

1. Verfahren zum Lesen erhabener Codeelemente eines Codes auf einem Behälter, das die Schritte aufweist:
Rotieren des Behälters (111) an einem Inspektionsplatz,
Projizieren von Licht (174) in Richtung der Oberfläche des Behälters (111) auf einem Niveau, das dem Ort der Codeelemente (112) entspricht, um aufeinanderfolgend jedes der Codeelemente (113) anzuleuchten,
dadurch gekennzeichnet, daß das Verfahren weiterhin die Schritte aufweist:
Erfassen (140) der Intensität des projizierten Lichtes, das bei einem natürlichen Winkel reflektiert wird, d.h. der Winkel zwischen dem projizierten Licht und einer Ebene, die durch eine Achse des Behälters verläuft, ist gleich dem Winkel zwischen dem reflektierten Licht und derselben Ebene, von der Behälteroberfläche, während das projizierte Licht vermieden wird, das jedes erhabene Codeelement beleuchtet und in einem Winkelbereich reflektiert wird,
wobei die Intensität des reflektierten Lichtes, das von dem Bereich des Behälters abgetastet worden ist, der kein Codeelement aufweist, relativ groß verglichen mit der Intensität des reflektierten Lichtes ist, das von einem Bereich des Behälters abgetastet wird, der ein Codeelement enthält.

2. Verfahren gemäß Anspruch 1, das die Schritte aufweist:
Vergleichen (204) von Ergebnissen des Abtastschrittes mit einem Schwellwertpegel, um zu bestimmen, ob das projizierte Licht einen Bereich des Behälters beleuchtet, der ein Codeelement enthält, oder einen Bereich des Behälters, der kein Codeelement enthält,
wobei der Schwellwertpegel zwischen den relativ großen und kleinen Pegeln liegt.

3. System zum Identifizieren defekter Herstellungsformen in einer Behälterformmaschine, wobei das System aufweist:
eine Vielzahl von Behältern (111), von denen jeder einen Code (112) aus erhabenen Codeelementen (113) hat, die die Herstellungsform identifizieren, in der der Behälter geformt worden ist, eine Einrichtung (97) zum Rotieren jedes der Behälter an einem Inspektionsplatz,
eine Beleuchtungseinrichtung (142) zum Projizieren von Licht in Richtung des Behälters, während er sich an dem Inspektionsplatz befindet, auf einem Niveau, das dem Ort der Codeelemente entspricht, so daß das Licht sequentiell jedes Codeelement individuell während der Rotation des Behälters beleuchtet, dadurch gekennzeichnet, daß das System weiterhin aufweist:
Sensoreinrichtungen (144, 170) zum Empfangen von Licht, das durch die Beleuchtungseinrichtung projiziert worden ist, das bei einem natürlichen Winkel reflektiert wurde, d.h. der Winkel zwischen dem projizierten Licht und einer Ebene, die durch eine Achse des Behälters verläuft, ist gleich dem Winkel zwischen dem reflektierten Licht und solch einer Ebene, von der Oberfläche des Behälters, während Licht vermieden wird, das durch die Beleuchtungseinrichtung projiziert worden ist, das von der Oberfläche jedes Codeelementes bei einem Bereich von Winkeln relativ zu dem Licht reflektiert worden ist, das von der Oberfläche des Behälters reflektiert worden ist, und Erzeugen eines ersten Ausgangssignales entsprechend der relativ großen Lichtmenge, die von einem Bereich des Behälters reflektiert wurde, der kein Codeelement enthält, und eines zweiten Ausgangssignales entsprechend der relativ kleinen Lichtmenge, die von einem Bereich des Behälters reflektiert worden ist, der ein Codeelement enthält, und
Einrichtungen (136, 126) zum Montieren der Beleuchtungseinrichtung und der Sensoreinrichtung in einer operativen Beziehung zu dem Inspektionsplatz, so daß die Beleuchtungseinrichtung positioniert ist, um das Licht in Richtung der Behälteroberfläche auf dem Niveau des Codes zu projizieren, und daß die Sensoreinrichtung positioniert ist, um das Licht von der Beleuchtungseinrichtung zu empfangen, das bei einem natürlichen Winkel von der Behälteroberfläche reflektiert wird.

4. System gemäß Anspruch 4, das aufweist:
eine Prozessoreinrichtung (124) zum Umsetzen der ersten und zweiten Ausgangssignale der Sensoreinrichtung in binäre Codeinformation, wobei die Prozessoreinrichtung einen Komparator (204) zum Vergleichen der Größen der ersten und zweiten Ausgangssignale mit einem Schwellwert aufweist, wobei der Schwellwert zwischen einem relativ hohen Pegel entsprechend der Ausrichtung der Beleuchtungseinrichtung und der Sensoreinrichtung mit einem Bereich des Behälters, der kein Codeelement enthält, und einem relativ niedrigen Pegel festgelegt ist, der der Ausrichtung der Beleuchtungseinrichtung und der Sensoreinrichtung mit einem Codeelement entspricht.

5. System gemäß Anspruch 5, worin die Beleuchtungseinrichtung aufweist:
eine Lichtquelle (170), und
eine Vielzahl von ersten optischen Fasern (152) deren benachbarte erste Enden unterstützt sind, um Licht von der Quelle zu empfangen, und auf der anderen Seite deren zweite Enden unterstützt sind, um das Licht von der Quelle in Richtung des Behälters zu projizieren, wobei das projizierte Licht eine Querschnittsbreite hat, die kleiner als der Zentrumsabstand zwischen zwei benachbarten Codeelementen ist.

6. System gemäß Anspruch 6, worin die Sensoreinrichtung aufweist:
eine Photodiode (140), und
eine Vielzahl von zweiten optischen Fasern (154), deren benachbarte erste Enden in Richtung der Photodiode gerichtet sind, und deren entgegengesetzte zweite Enden positioniert sind, um Licht zu empfangen, das bei dem natürlichen Winkel von dem Behälter reflektiert wird.

7. System gemäß Anspruch 4, worin die Einrichtung zum Montieren der Beleuchtungseinrichtung und der Sensoreinrichtung eine Einrichtung zum Positionieren der Beleuchtungseinrichtung aufweist, um Licht in Richtung eines Bereiches auf dem Behälter ohne ein Codeelement bei einem ersten wesentlichen Winkel bezüglich einer Senkrechten zu dem Bereich zu projizieren, und eine Einrichtung aufweist zum Positionieren der Sensoreinrichtung bei ungefähr zweimal dem ersten Winkel, so daß Licht, das durch die Beleuchtungseinrichtung in Richtung des Bereiches auf der Behälteroberfläche projiziert wird, natürlich zu der Sensoreinrichtung reflektiert wird.

8. System gemäß Anspruch 4, worin die Einrichtung zum Montieren angepaßt ist, die Beleuchtungseinrichtung und die Sensoreinrichtung in einer Ebene zu positionieren, die ungefähr senkrecht zu der Oberfläche des Behälters ist.

## Revendications

1. Procédé de lecture d'éléments de code en relief d'un code sur un conteneur comprenant les étapes suivantes:
rotation dudit conteneur (111) à un emplacement de vérification,
projection de lumière (174) vers la surface du conteneur (111) à un niveau correspondant à l'emplacement des éléments de code (112) pour éclairer séquentiellement chacun des éléments de code (113), caractérisé en ce que le procédé comporte en outre les étapes suivantes:
détection (140) de l'intensité de la lumière projetée qui est réfléchie selon un angle naturel c'est-à-dire que l'angle entre la lumière projetée et un plan passant par un axe du conteneur est égal à l'angle entre la lumière réfléchie et le même plan, depuis la surface du conteneur tout en évitant la lumière projetée qui éclaire chaque élément de code en relief et qui est réfléchie selon une plage d'angles,
l'intensité de la lumière réfléchie détectée en provenance de la région dudit conteneur dépourvue d'élément de code étant relativement importante par rapport à l'intensité de la lumière réfléchie détectée en provenance d'une région dudit conteneur contenant un élément de code.

2. Procédé selon la revendication 1 comprenant les étapes suivantes:
comparaison (204) résultant de l'étape de détection à un niveau de seuil pour déterminer si la lumière projetée éclaire une région dudit conteneur contenant un élément de code ou une région dudit conteneur ne contenant pas d'élément de code,
ledit niveau de seuil étant entre lesdits niveaux relativement élevé et faible.

3. Système pour identifier des moules défectueux dans une machine de formation de conteneurs, ledit système comprenant:
une pluralité de conteneurs (111) ayant chacun un code (112) d'éléments de code en relief (113) identifiant le moule dans lequel le conteneur a été formé,
des moyens (97) pour faire tourner chacun desdits conteneurs à un emplacement de vérification,
des moyens d'éclairage (142) pour projeter de la lumière vers ledit conteneur tandis qu'il est à l'emplacement de vérification à un niveau correspondant à l'emplacement des éléments de code de telle sorte que ladite lumière éclaire séquentiellement chaque élément de code individuellement au cours de la rotation dudit conteneur, caractérisé en ce que le système comporte en outre:
des moyens formant capteurs (144, 170) pour recevoir la lumière projetée par les moyens d'éclairage qui est réfléchie selon un angle naturel c'est-à-dire que l'angle entre la lumière projetée et un plan passant par un axe du conteneur est égal à l'angle entre la lumière réfléchie et un tel plan, depuis la surface dudit conteneur tout en évitant la lumière projetée par les moyens d'éclairage qui est réfléchie par la surface de chaque élément de code selon une plage d'angles par rapport à la lumière qui est réfléchie par la surface du conteneur, et pour produire un premier signal de sortie correspondant à la quantité relativement importante de lumière réfléchie par une région dudit conteneur qui ne contient pas d'élément de code et un second signal de sortie correspondant à la quantité relativement faible de lumière réfléchie par une région dudit conteneur qui contient un élément de code, et
des moyens (146, 126) pour monter lesdits moyens d'éclairage et lesdits moyens formant capteurs en relation fonctionnelle audit emplacement de vérification de telle sorte que lesdits moyens d'éclairage sont disposés pour projeter ladite lumière vers la surface du conteneur au niveau du code et lesdits moyens formant capteurs sont disposés pour recevoir la lumière desdits moyens d'éclairage qui est réfléchie selon un angle naturel par la surface du conteneur.

4. Système selon la revendication 3 comprenant:
des moyens de traitement (124) pour transformer lesdits premier et second signaux de sortie desdits moyens formant capteurs en information de code binaire, lesdits moyens de traitement comportant un comparateur (204) pour comparer les amplitudes desdits premier et second signaux de sortie à un seuil, ledit seuil étant établi entre un niveau relativement élevé correspondant à l'alignement desdits moyens d'éclairage et desdits moyens formant capteurs avec une région dudit conteneur qui ne contient pas d'élément de code et un niveau relativement faible correspondant à l'alignement desdits moyens d'éclairage et desdits moyens formant capteurs avec un élément de code.

5. Système selon la revendication 4 dans lequel les moyens d'éclairage comportent:
une source de lumière (170), et
une pluralité de premières fibres optiques (152) ayant des premières extrémités adjacentes supportées pour recevoir de la lumière en provenance de ladite source et à l'opposé, des secondes extrémités supportées pour projeter ladite lumière en provenance de ladite source vers ledit conteneur, la lumière projetée ayant une largeur en coupe inférieure à l'espacement des centres entre deux éléments de code adjacents.

6. Système selon la revendication 5 dans lequel les moyens formant capteurs comportent:
une photodiode (140), et
une pluralité de secondes fibres optiques (154) ayant des premières extrémités adjacentes pointées vers la photodiode et des secondes extrémités opposées disposées pour recevoir la lumière réfléchie selon l'angle naturel par rapport audit conteneur.

7. Système selon la revendication 4 dans lequel lesdits moyens pour monter lesdits moyens d'éclairage et lesdits moyens formant capteurs comportent des moyens pour positionner lesdits moyens d'éclairage afin de projeter la lumière vers une région sur ledit conteneur dépourvue d'éléments de code selon un premier angle important par rapport à une perpendiculaire à ladite région et comporte des moyens pour positionner lesdits moyens formant capteurs approximativement au double dudit premier angle de telle sorte que la lumière projetée par lesdits moyens d'éclairage vers ladite région sur ladite surface du conteneur est naturellement réfléchie vers lesdits moyens formant capteurs.

8. Système selon la revendication 4, dans lequel lesdits moyens de montage sont aptes à positionner lesdits moyens d'éclairage et lesdits moyens formant capteurs dans un plan qui est approximativement normal à la surface dudit conteneur.
